(19) Europäisches Patentamt
European Patent Office
Office européen des brevets

(11) **EP 4 697 399 A1**

(12) **EUROPEAN PATENT APPLICATION**

(43) Date of publication:
**18.02.2026 Bulletin 2026/08**

(21) Application number: **25168643.2**

(22) Date of filing: **04.04.2025**

(51) International Patent Classification (IPC):
**H01M 4/131** (2010.01)     **H01M 4/133** (2010.01)
**H01M 4/36** (2006.01)       **H01M 4/58** (2010.01)
**H01M 4/587** (2010.01)      **H01M 10/0525** (2010.01)

(52) Cooperative Patent Classification (CPC):
**H01M 4/5825; H01M 4/131; H01M 4/133;
H01M 4/364; H01M 4/366; H01M 4/587;
H01M 10/0525;** Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.04.2024 KR 20240054032**

(71) Applicant: **SAMSUNG SDI CO., LTD.
Yongin-si, Gyeonggi-do 17084 (KR)**

(72) Inventors:
• **KIM, Young-Ki**
  17084 Yongin-si (KR)
• **CHOI, Aram**
  17084 Yongin-si (KR)
• **KIM, Sangmi**
  17084 Yongin-si (KR)
• **DOO, Sungwook**
  17084 Yongin-si (KR)
• **KANG, Gwiwoon**
  17084 Yongin-si (KR)

(74) Representative: **Marks & Clerk LLP
15 Fetter Lane
London EC4A 1BW (GB)**

(54) **POSITIVE ELECTRODE ACTIVE MATERIAL FOR RECHARGEABLE LITHIUM BATTERY, PREPARATION METHOD OF THE SAME, AND RECHARGEABLE LITHIUM BATTERY INCLUDING THE SAME**

(57)    A positive electrode active material for a rechargeable lithium battery, a preparation method of the same, and a rechargeable lithium battery including the same are provided. The positive electrode active material includes a first particle containing a compound represented by Formula 1 and having a first average particle diameter, and a second particle containing a compound represented by Formula 2 and having a second average particle diameter smaller than the first average particle diameter. An amount by weight of the second particle is greater than an amount by weight of the first particle.

FIG. 6

EP 4 697 399 A1

**Description**

**BACKGROUND**

One or more aspects of embodiments of the present disclosure herein are directed toward a positive electrode active material for a rechargeable lithium battery, a preparation method of the positive electrode active material, and a rechargeable lithium battery including the positive electrode active material. For example, the positive electrode active material may include an olivine-based lithium compound, a preparation method of the positive electrode active material that may include the olivine-based lithium compound, and a rechargeable lithium battery including the positive electrode active material that may include the olivine-based lithium compound.

With the recent increase (surge) in the use of battery-powered electronic devices (such as mobile phones and/or laptop computers), and/or electric vehicles, the demand or desire for rechargeable batteries with relatively high energy density and high capacity has rapidly increased. Accordingly, research and development efforts aimed at improving (enhancing) the performance of rechargeable batteries, such as rechargeable lithium batteries, have been actively pursued.

The rechargeable lithium battery includes a positive electrode and a negative electrode both containing active materials capable of intercalation and deintercalation of lithium ions, along with an electrolyte solution. Electrical energy is generated (produced) by oxidation and reduction reactions when the lithium ions are intercalated into and deintercalated from the positive electrode and the negative electrode.

**SUMMARY**

One or more aspects of embodiments of the present disclosure are directed toward a positive electrode active material with (having) high energy density, high operating voltage, and high conductivity.

One or more aspects of embodiments of the present disclosure are also directed toward a rechargeable lithium battery with (having) high energy density, high operating voltage, and improved low-temperature characteristics.

Additional aspects will be set forth in part in the description which follows and, in part, will be apparent from the description, or may be learned by practice of the presented embodiments of the disclosure.

One or more embodiments of the present disclosure provide a positive electrode active material including a first particle containing a compound represented by Formula 1 and having a first average particle diameter, and a second particle containing a compound represented by Formula 2 and having a second average particle diameter smaller than the first average particle diameter. In the positive electrode active material, an amount by weight of the second particle may be greater than an amount by weight of the first particle.

$$\text{Formula 1} \qquad \text{Li}_{a1}\text{Mn}_{z1}\text{Fe}_{x1}\text{B1}_{y1}\text{PO}_{4\text{-}b1}.$$

In Formula 1, $0.8 \leq a1 \leq 1.2$, $0.4 \leq z1 \leq 0.9$, $0.1 \leq x1 \leq 0.6$, $0 \leq y1 \leq 0.05$, $0 \leq b1 \leq 0.05$, and $x1 + y1 + z1 = 1$ may be satisfied.

$$\text{Formula 2} \qquad \text{Li}_{a2}\text{Fe}_{x2}\text{B2}_{y2}\text{PO}_{4\text{-}b2}.$$

In Formula 2, $0.8 \leq a2 \leq 1.2$, $0.950 \leq x2 \leq 0.999$, $0.001 \leq y2 \leq 0.05$, $0 \leq b2 \leq 0.05$, and $x2 + y2 = 1$ may be satisfied.

Each of B1 in Formula 1 and B2 in Formula 2 is at least one element selected from the group consisting of Ti and Mg.

In one or more embodiments, a preparation method of a positive electrode active material may include preparing a first particle having a first average particle diameter, preparing a second particle having a second average particle diameter smaller than the first average particle diameter, and mixing the first particle and the second particle. The preparing of the first particle may include mixing a manganese iron phosphate precursor, a first lithium source, a first carbon source, and a first dopant source to form a first mixture, drying the first mixture through spray drying, and calcining the dried first mixture. The preparing of the second particle may include mixing an iron phosphate precursor, a second lithium source, a second carbon source, and a second dopant source to form a second mixture, performing wet grinding on the second mixture, drying the second mixture, and calcining the dried second mixture. The first particle and the second particle may be mixed such that an amount by weight of the second particle in the positive electrode active material may be greater than an amount by weight of the first particle.

In one or more embodiments of the present disclosure, a rechargeable lithium battery includes the above-described positive electrode active material.

At least some of the above and other features of the invention are set out in the claims.

## BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain principles of the present disclosure. In the drawings:

FIG. 1 is a simplified conceptual diagram illustrating a rechargeable lithium battery according to one or more embodiments of the present disclosure;
FIGS. 2-5 are schematic views each illustrating a rechargeable lithium battery according to one or more embodiments, FIG. 2 shows a cylindrical battery, FIG. 3 shows a prismatic battery, and FIGS. 4 and 5 show pouch-type (kind) batteries;
FIG. 6 is an enlarged view of a positive electrode active material layer of a rechargeable lithium battery according to one or more embodiments of the present disclosure;
FIG. 7 is a flowchart showing a preparation method of a positive electrode active material according to one or more embodiments of the present disclosure;
FIG. 8A is a scanning electron microscope (SEM) image of a positive electrode active material according to Example 1 of the present disclosure; and
FIG. 8B is a SEM image of a positive electrode active material according to Example 2 of the present disclosure.

## DETAILED DESCRIPTION

In order to fully understand the configuration and effect of the present disclosure, embodiments of the present disclosure will be described in more detail with reference to the accompanying drawings. The present disclosure may, however, be embodied in one or more suitable forms and should not be construed as limited to one or more embodiments set forth herein, and one or more suitable changes and modifications can be made. Rather, these embodiments are provided so that this disclosure will be thorough and complete, and will fully convey the scope of the present disclosure to those skilled in the art to which the present disclosure pertains.

In this specification, it will be understood that, if (e.g., when) an element is referred to as being on another element, the element may be directly on the other element or intervening elements may be present therebetween. In contrast, if an element is referred to as being directly on another element, no intervening elements are present therebetween.

In the drawings, thicknesses of components are exaggerated for clarity and to assist in explaining the technical contents. Like reference numerals or symbols refer to like elements throughout, and duplicative descriptions thereof may not be provided the specification.

The singular forms are intended to include the plural forms as well, unless the context clearly indicates otherwise. In addition, unless otherwise specially noted, the phrases "A or B" and "A and/or B" may indicate "A but not B", "B but not A", or "A and B". The terms "comprises/includes" and/or "comprising/including" used in this specification do not exclude the presence or addition of one or more other components.

In this specification, "combination thereof" may refer to a mixture, a stack, a composite, a copolymer, an alloy, a blend, and/or a reaction product of components.

Unless otherwise defined in this specification, a particle diameter may be an average particle diameter. Also, the particle diameter may refer to an average particle diameter (D50) which refers to a diameter of particles at a cumulative volume of about 50 vol% in a particle size distribution. The average particle diameter (D50) may be measured by any suitable method, for example, may be measured by a particle size analyzer, or may also be measured using a transmission electron microscope (TEM) image and/or a scanning electron microscope (SEM) image. In one or more embodiments, the average particle diameter is measured by a measuring device using dynamic light-scattering, wherein the number of particles is counted for each particle size range by performing data analysis, and an average particle diameter (D50) value may then be obtained by calculation therefrom. Also, the average particle diameter may be measured using a laser diffraction method. When measured by the laser diffraction method, specifically, after dispersing particles to be measured in a dispersion medium, the dispersion medium is introduced into a commercial laser diffraction particle size measurement instrument (e.g., Micro-Trac MT 3000™) and irradiated with ultrasonic waves of about 28 kHz at an output of about 60 W, and the average particle diameter (D50) based on about 50% of particle size distribution in the measurement instrument may then be calculated. In the present specification, when particles are spherical, "diameter" or "size" indicates a particle diameter, and when the particles are non-spherical, the "diameter" or "size" indicates a major axis length.

It will be understood that, although the terms first, second, etc. may be used herein to describe various elements, these elements should not be limited by these terms. These terms are only used to distinguish one element from another element. Thus, a first element could be termed a second element without departing from the teachings of the present invention. Similarly, a second element could be termed a first element.

As used herein, the terms "use," "using," and "used" may be considered synonymous with the terms "utilize," "utilizing," and "utilized," respectively.

As used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Further, the use of "may" when describing embodiments of the present disclosure refers to "one or more embodiments of the present disclosure".

Spatially relative terms, such as "beneath," "below," "lower," "above," "upper," "bottom," "top" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

As used herein, the terms "substantially", "about", and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within $\pm$ 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

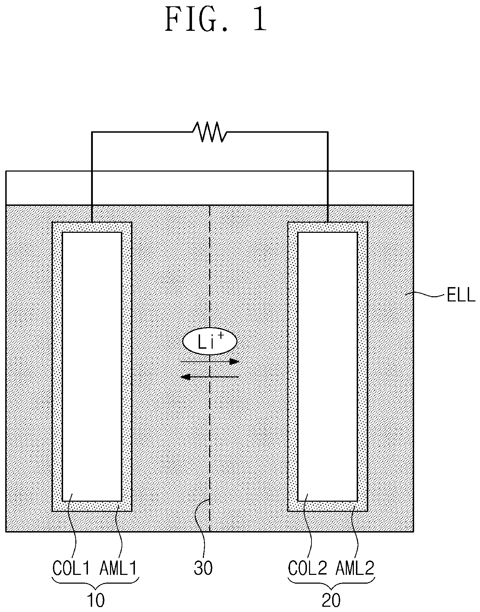

FIG. 1 is a simplified conceptual diagram showing a rechargeable lithium battery according to one or more embodiments of disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced and/or apart (e.g., spaced apart or separated) from each other with the separator 30 therebetween. The separator 30 may be arranged between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated with the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

**Positive Electrode 10**

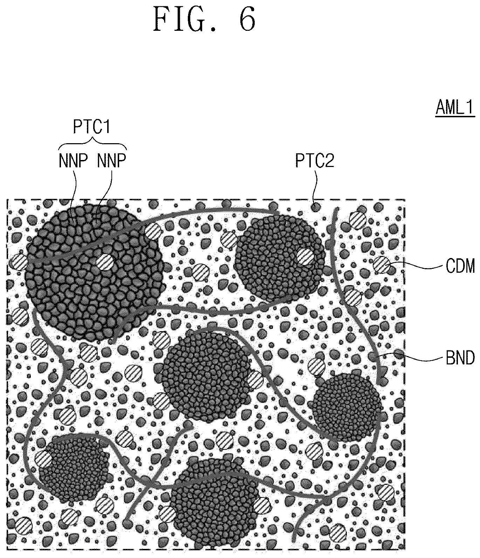

The positive electrode 10 for a rechargeable lithium battery may include a current collector COL1 and a positive electrode active material layer AML1 formed on the current collector COL1. The positive electrode active material layer AML1 may include a positive electrode active material and may further include a binder and/or a conductive material. The positive electrode active material layer AML1 according to one or more embodiments of the present disclosure will be described in more detail with reference to FIG. 6. Aluminium (Al) may be used for the current collector COL1, but the present disclosure is not limited thereto.

## Negative Electrode 20

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material based on a total 100 wt% of the negative electrode active material layer AML2.

The binder may serve to attach the negative electrode active material particles well or suitably to each other and also to attach the negative electrode active material well or suitably to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and/or a (e.g., any suitable) combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, and/or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, and/or a (e.g., any suitable) combination thereof.

The conductive material (e.g., electron conductor) may be used to impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, Ketjen black, a carbon fiber, a carbon nanofiber, and a carbon nanotube; a metal-based material including copper, nickel, aluminium, silver, and/or the like, in a form of a metal powder and/or a metal fiber; a conductive polymer such as a polyphenylene derivative; and/or a (e.g., any suitable) mixture thereof.

The negative current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

## Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, such as, for example, crystalline carbon, amorphous carbon and/or a (e.g., any suitable) combination thereof. The crystalline carbon may be graphite such as non-shaped (e.g., randomly shaped), sheet-shaped, flake-shaped, sphere-shaped, and/or fiber-shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x \leq 2$), a Si-Q alloy (where Q is selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof). The Sn-based negative electrode active material may include Sn, $SnO_y$ ($0 < y \leq 2$), e.g., $SnO_2$, a Sn-based alloy, and/or a (e.g., any suitable) combination thereof.

The silicon-carbon composite may be a composite of silicon and amorphous carbon. According to one or more embodiments, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material and/or the Sn-based negative electrode active material may be used in combination with a carbon-based negative electrode active material.

**Separator 30**

Depending on the type (kind) of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film may be a polyethylene/polypropylene two-layer separator, polyethylene/polypropylene/polyethylene three-layer separator, polypropylene/polyethylene/polypropylene three-layer separator, and/or the like.

The separator 30 may include a porous substrate and a coating layer including an organic material, an inorganic material, and/or a (e.g., any suitable) combination thereof on one or both (e.g., simultaneously) surfaces (e.g., opposite surfaces) of the porous substrate.

The porous substrate may be a polymer film formed of any one selected from among polymer polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (TEFLON™), and/or may be a copolymer and/or mixture of two or more thereof.

The organic material may include a polyvinylidene fluoride-based polymer and/or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and/or a (e.g., any suitable) combination thereof, but the present disclosure is not limited thereto.

The organic material and the inorganic material may be mixed in one coating layer, or a coating layer including an organic material and a coating layer including an inorganic material may be stacked.

**Electrolyte Solution ELL**

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based solvent, an ester-based solvent, an ether-based solvent, a ketone-based solvent, and/or an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether bond), and/or the like; amides such as dimethylformamide; dioxolanes such as 1,3-dioxolane, 1,4-dioxolane, and/or the like; sulfolanes, and/or the like.

The non-aqueous organic solvents may be used alone or in combination of two or more.

In addition, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes.

Examples of the lithium salt include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, Lil, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)$ $(C_yF_{2y+1}SO_2)$ (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato) borate (LiBOB).

**Rechargeable Lithium Battery**

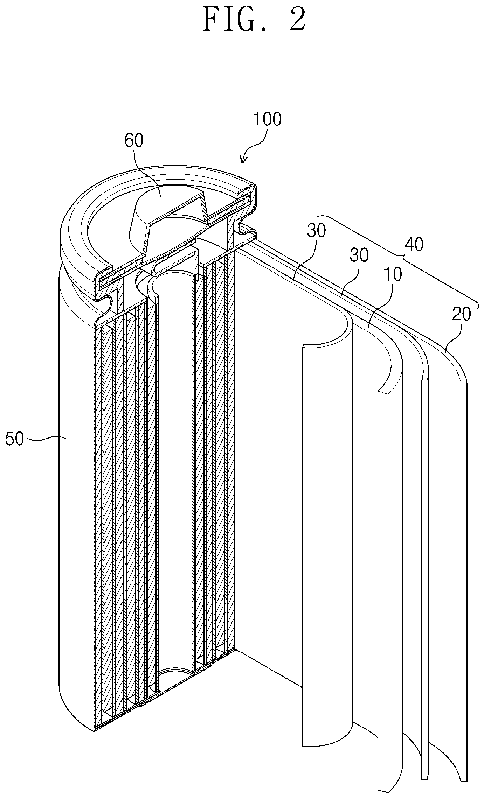

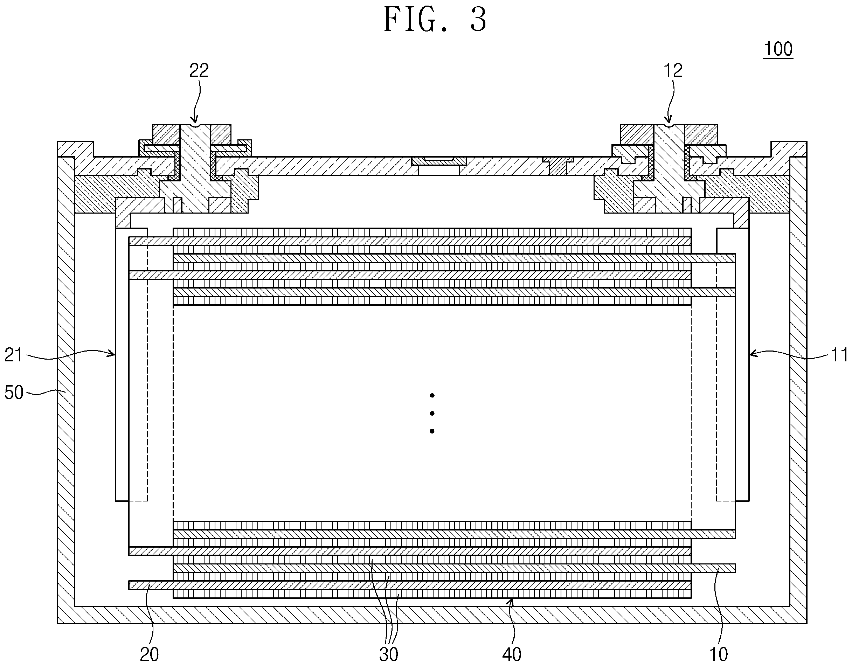

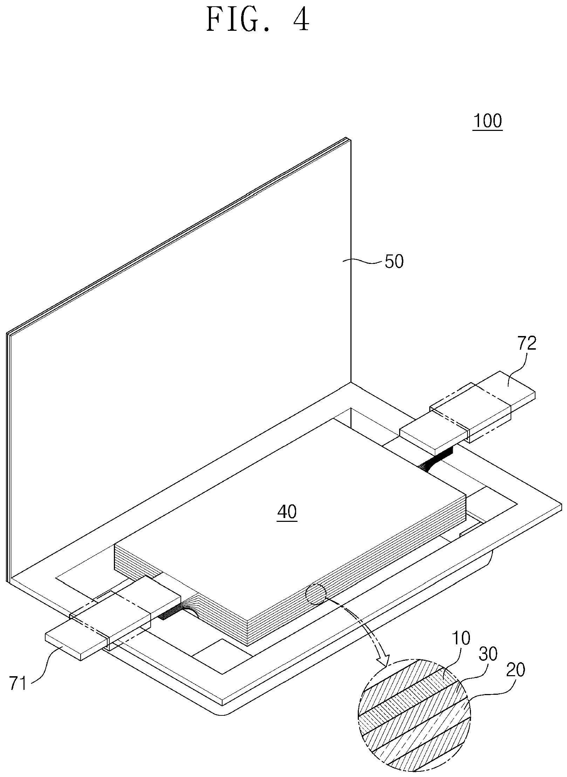

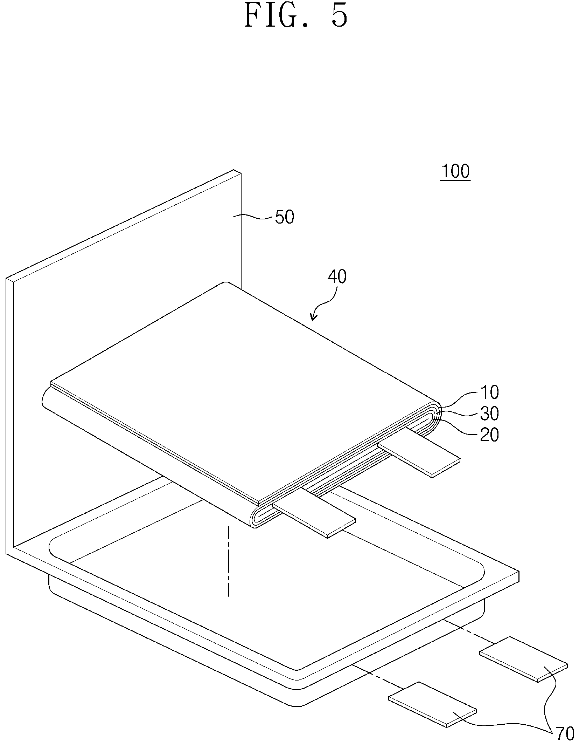

The rechargeable lithium battery may be classified into cylindrical, prismatic, pouch, or coin-type (kind) batteries, and/or the like depending on their shape. FIGS. 2 to 5 are schematic views illustrating a rechargeable lithium battery according to one or more embodiments. FIG. 2 shows a cylindrical battery, FIG. 3 shows a prismatic battery, and FIGS. 4 and 5 show pouch-type (kind) batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting examples.

FIG. 6 is an enlarged view of a positive electrode active material layer of a rechargeable lithium battery according to one or more embodiments of the present disclosure. Referring to FIG. 6, the positive electrode active material layer AML1 (see e.g., FIG. 1) may include a first particle PTC1, a second particle PTC2, a conductive material CDM, and a binder BND. A plurality of first particles PTC1 and a plurality of second particles PTC2 constitute a positive electrode active material according to one or more embodiments of the present disclosure.

The positive electrode active material layer AML1 may further include an additive that may serve as a sacrificial positive electrode.

An amount of the positive electrode active material (including the first particle PTC1 and the second particle PTC2) in the positive electrode active material layer AML1 may be about 90 wt% to about 99.5 wt% with respect to 100 wt% of the positive electrode active material layer AML1. An amount of each of the binder BND and the conductive material CDM may be about 0.5 wt% to about 5 wt% with respect to 100 wt% of the positive electrode active material layer AML1.

The binder BND may bind the first particle PTC1, the second particle PTC2, and the conductive material CDM to each other. For example, the binder BND may include at least one selected from the group consisting of polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, and nylon, but one or more embodiments of the present disclosure are not limited thereto.

The conductive material CDM may be used to improve conductivity of the positive electrode active material layer AML1. Any suitable conductive material that does not cause undesirable chemical changes of the positive electrode active material layer AML1 may be used, without limitation, as the conductive material CDM. Examples of the conductive material CDM may include a carbon-based material such as natural graphite, artificial graphite, carbon black, acetylene black, ketjen black, a carbon fiber, a carbon nanofiber, and/or carbon nanotube; a metal-based material containing copper, nickel, aluminium, silver, and/or the like, in a form of a metal powder and/or a metal fiber; a conductive polymer such as a polyphenylene derivative; and/or a (e.g., any suitable) mixture thereof.

Hereinafter, each of the first particle PTC1 and the second particle PTC2 will be described in more detail.

**First Particle PTC1**

The first particle PTC1 may have a polycrystal form, and may include (e.g., may be) a secondary particle in which at least two first primary particles NNP are aggregated (e.g., agglomerated). For example, one first particle PTC1 may include a plurality of first primary particles NNP that are aggregated (e.g., agglomerated) with each other. The first particle PTC1 may have a spherical or oval shape.

In one or more embodiments, the first particle PTC1 may include a coating layer on a surface thereof (e.g., a surface coating layer). The coating layer may cover the entire surface of the first particle PTC1, or may cover a portion of the surface of the first particle PTC1. For example, the coating layer may include carbon and/or a carbon-containing compound. The first particle PTC1 may have improved structural stability and electrical conductivity due to the coating layer.

The coating layer may further include at least one selected from the group consisting of a titanium-containing compound and a magnesium-containing compound. A metal-containing compound such as the titanium-containing compound and/or the magnesium-containing compound may be, for example, a metal oxide, a metal hydroxide, a metal carbonate, or a composite or mixture thereof. The metal-containing compound may further include another metal and/or non-metal element. For example, the metal-containing compound may further include lithium.

In one or more embodiments, the first particle PTC1 may further include a grain boundary coating layer on surfaces of the first primary particles NNP (e.g., of adjacent first primary particles NNP). The grain boundary coating layer may be present inside the first particle PTC1. The grain boundary coating layer may be formed along an interface between the first primary particles NNP (e.g., between adjacent first particles NNP) inside the first particle PTC1. For example, the grain boundary coating layer may refer to a material applied to the grain boundary inside the first particle PTC1. The grain boundary coating layer may include carbon and/or a carbon-containing compound. The grain boundary coating layer may further include at least one selected from the group consisting of the titanium-containing compound and the magnesium-containing compound.

The inside of the first particle PTC1 may refer to an entire inner region of the first particle PTC1 excluding the surface of the first particle PTC1. For example, the inside of the first particle PTC1 may refer to an entire inner region from about 10 nm depth (about 10 nm deep) from the outer peripheral surface of the first particle PTC1, or a region from about 10 nm depth to about 2 $\mu$m depth (from about 10 nm to about 2 $\mu$m deep). For example, this inner region may extend from about 10 nm beneath the outer peripheral surface to a depth of about 2 $\mu$m.

Because the first particle PTC1 further includes a grain boundary coating part, structural stability may be strengthened, and a coating layer may be formed uniformly (e.g., substantially uniformly) on the surface of the first particle PTC1. In addition, because the first particle PTC1 further includes the grain boundary coating part (e.g., grain boundary coating layer), the electrical conductivity of the first particle PTC1 may be further improved.

The first particle PTC1 may have an average particle diameter of about 2 $\mu$m to about 15 $\mu$m, about 3 $\mu$m to about 12 $\mu$m, or about 3 $\mu$m to about 7 $\mu$m. The average particle diameter of the first particle PTC1 is larger than the average particle diameter of the second particle PTC2 to be described in more detail herein below. In one or more embodiments, the average particle diameter may be measured with a particle size analyzer. The average particle diameter may refer to a diameter (D50) of particles at a cumulative volume of about 50 vol% in a particle size distribution.

The size of the first primary particle NNP of the first particle PTC1 may be about 10 nm to about 400 nm, about 20 nm to about 300 nm, about 50 nm to about 200 nm, or about 50 nm to about 150 nm. In one or more embodiments, the size of the first primary particle NNP may refer to a value obtained by measuring diameters of about 30 first primary particles NNP randomly selected from among an electron micrograph of a positive electrode active material. The sizes of the first primary particles NNP may be substantially uniform.

The first particle PTC1 may have a "maximum" particle diameter ($D_{max}$) (e.g., the diameter of the larger particles amount the first particle PTC1) of about 10 $\mu$m or greater.

The first particle PTC1 may include an olivine-based lithium compound represented by Formula 1.

$$\text{Formula 1} \qquad \text{Li}_{a1}\text{Mn}_{z1}\text{Fe}_{x1}\text{B1}_{y1}\text{PO}_{4\text{-}b1}.$$

In Formula 1, $0.8 \leq a1 \leq 1.2$, $0.4 \leq z1 \leq 0.9$, $0.1 \leq x1 \leq 0.6$, $0 \leq y1 \leq 0.05$ (e.g. $0.001 \leq y1 \leq 0.05$), $0 \leq b1 \leq 0.05$, and $x1 + y1 + z1 = 1$ are satisfied.

B1 is at least one element selected from the group consisting of Ti and Mg. B1 may be a dopant doped into the first particle PTC1. For example, B1 may contain Ti and Mg.

In the first particle PTC1, B1 may be Ti and Mg. When the first particle PTC1 is doped with Ti, this may have the effect of controlling growth of the first primary particles NNP of the first particle PTC1, and as a result, the sizes of the first primary particles NNP of the first particle PTC1 may be made smaller. In the first particle PTC1, an atomic fraction of Ti may be greater than an atomic fraction of Mg. The first particle PTC1 may satisfy Expression 1.

Expression 1

$$3.0 < \frac{2 \times (oxidation\ number\ of\ Mg) + 4 \times (oxidation\ number\ of\ Ti)}{(oxidation\ number\ of\ Mg) + (oxidation\ number\ of\ Ti)} < 3.5$$

The first particle PTC1 may further include carbon derived from the above-described coating layer (e.g., surface coating layer) and/or grain boundary coating layer. An amount of carbon element in the first particle PTC1 may be about 0.5 wt% to about 10 wt%, about 1 wt% to about 3 wt%, or about 1.5 wt% to about 2.5 wt% based on a total of 100 wt% of the first particle PTC1.

The first particle PTC1 may have a spherical (e.g., a substantially spherical) shape in which the nano-sized first primary particles NNP are aggregated (e.g., agglomerated). With the first primary particles NNP being closely aggregated (e.g., agglomerated) with each other, the first particle PTC1 may have the following characteristics. The first particle PTC1 may have a spherical (e.g., a substantially spherical) or oval shape. The average particle diameter (D50) of the first particle PTC1 may be about 2 μm to about 15 μm. The first particle PTC1 may have a porosity of about 30% to about 50%. Here, porosity (n) may be defined as the pore volume (Vp) divided by the total volume (Vt) of particles, or

$$n = \frac{V_p}{V_t}$$

Porosity (n) may be defined as the pore volume ($V_p$) divided by the total volume ($V_t$) of a particle. For example, porosity can be measured using Mercury Intrusion Porosimetry (MIP), Gas Adsorption (BET Method), or Helium Pycnometry.

The span value, obtained by analysis on the first particle PTC1 with a particle size analyzer, may be about 0.3 to about 0.75. In particle size analysis, the span value is a value that indicates the width of the particle size distribution, or

$$\text{Span} = \frac{D_{90} - D_{10}}{D_{50}}$$

In one or more embodiments, the first particle PTC1 typically has a polycrystal form and exists as a secondary particle (in a form of secondary particle) composed of aggregated primary particles (NNP). These primary particles, which range in size from 10 nm to 400 nm, aggregate to form larger secondary particles with average diameters between 2 μm and 15 μm, often exhibiting a spherical or oval shape. The first particle PTC1 may include a surface coating layer, which can cover the entire or part of the surface, enhancing structural stability and electrical conductivity. This coating may contain carbon or compounds of titanium and magnesium. Additionally, a grain boundary coating layer may be present inside the first particle PTC1, further improving stability and conductivity. The inner region of the first particle PTC1 extends from about 10 nm beneath the surface to a depth of about 2 μm. The olivine-based lithium compound in the first particle PTC1 may be represented by Formula 1.

Formula 1     $Li_{a1}Mn_{z1}Fe_{x1}B1_{y1}PO_{4-b1}$

Formula 1 includes specific ratios of elements, with Ti and Mg as dopants to control particle growth and enhance battery performance. The particle may also have a maximum diameter of 10 μm or greater and a porosity of 30% to 50%.

**Second Particle PTC2**

The second particle PTC2 may have a single particle form. In this specification, the single particle may refer to one particle that exists alone (e.g., not agglomerated with other particles) and without a grain boundary therein. In terms of morphology, the single particle may refer to one particle, a monolith structure, a single unitary structure, or a non-aggregated (e.g., non-agglomerated) particle, existing as an independent phase in which particles do not aggregate (or agglomerate) with each other. For example, the single particle may be a single crystal. In one or more embodiments, the single particle may be a particle containing a few crystals (e.g., the single particle may contain more than one crystal therein, but without it being a polycrystalline material). The single particle may be independently separated. In one or more embodiments, the term "single particle" may refer to about 2 to about 100 single particles bound (e.g., attached or adjacent) to each other.

The second particle PTC2 may be a nano-sized positive electrode active material. The second particle PTC2 may include at least one second primary particle (e.g., be a primary particle). In one or more embodiments, the second primary particles may also be attached with each other. The second particle PTC2 may not have the same spherical shape as that of the first particle PTC1, even though the second primary particles are attached with each other. For example, the second particle PTC2 may have a random shape.

The second particle PTC2 may be provided in one or more suitable sizes. For example, the second particle PTC2 may have an average particle diameter of about 0.5 μm to about 2.5 μm, or of about 1 μm. The second particle PTC2 may have a minimum particle diameter, which corresponds to the size of the second primary particle, of about 100 nm to about 500 nm, or about 200 nm to about 300 nm.

In one or more embodiments, the minimum particle diameter, which corresponds to the size of the second primary particle, may refer to a value obtained by measuring diameters of about 30 second primary particles randomly selected from among an electron micrograph of the second particle PTC2. In one or more embodiments, the size of the second primary particle may be larger than the size of the first primary particle NNP.

The second particle PTC2 may have a porosity smaller than about 30%. The span value, obtained by analysis on the second particle PTC2 with a particle size analyzer, may be outside the range of about 0.3 to about 0.75. In other words, the porosity and span value may differ from those of the first particle PTC1.

In one or more embodiments, the second particle PTC2 may include a coating layer on a surface thereof (e.g., a surface coating layer). The coating layer may cover the entire surface of the second particle PTC2, or may cover a portion of the surface of the second particle PTC2. For example, the coating layer may include carbon and/or a carbon-containing compound. The coating layer may further include at least one selected from the group consisting of a titanium-containing compound and a magnesium-containing compound. A metal-containing compound such as the titanium-containing compound and/or the magnesium-containing compound may be, for example, a metal oxide, a metal hydroxide, a metal carbonate, or a composite or mixture thereof. The metal-containing compound may further include another metal and/or non-metal element. For example, the metal-containing compound may further include lithium. The second particle PTC2 may have improved structural stability and electrical conductivity due to the coating layer.

The second particle PTC2 may include an olivine-based lithium compound represented by Formula 2.

$$\text{Formula 2} \qquad Li_{a2}Fe_{x2}B2_{y2}PO_{4-b2}.$$

In Formula 2, $0.8 \leq a2 \leq 1.2$, $0.950 \leq x2 \leq 0.999$, $0.001 \leq y2 \leq 0.05$, $0 \leq b2 \leq 0.05$, and $x2 + y2 = 1$ are satisfied. B2 is at least one element selected from the group consisting of Ti and Mg. B2 may be a dopant doped into the second particle PTC2. For example, B2 may contain Ti and Mg.

The second particle PTC2 may further include carbon derived from the coating layer previously described (e.g., the surface coating layer). An amount of carbon element in the second particle PTC2 may be about 0.5 wt% to about 5 wt%, about 0.5 wt% to about 3 wt%, or about 0.5 wt% to about 2 wt% based on a total 100 wt% of the second particle PTC2. The amount of carbon in the second particle PTC2 may be smaller than the amount of carbon in the first particle PTC1. This is because it is more difficult for the coating layer (e.g., the surface coating layer) to be formed suitably smoothly on the second particle PTC2, which is a single particle, than on the first particle PTC1, which is a secondary particle.

In one or more embodiments, the second particle PTC2 typically exists in a single-particle form, meaning it is not agglomerated with other particles and lacks internal grain boundaries. This single particle can be a single crystal or contain a few crystals without being polycrystalline. PTC2 may be a nano-sized positive electrode active material with an average particle diameter ranging from 0.5 $\mu$m to 2.5 $\mu$m, and primary particles sized between 100 nm and 500 nm. Unlike the first particle PTC1, the second particle PTC2 may have a random shape and a porosity of less than 30%. It may also include a surface coating layer, which can enhance structural stability and electrical conductivity. This coating may contain carbon or compounds of titanium and magnesium. The olivine-based lithium compound in PTC2 may be represented by Formula 2.

$$\text{Formula 2} \qquad Li_{a2}Fe_{x2}B2_{y2}PO_{4-b2}.$$

Formula 2 includes specific ratios of elements, with Ti and Mg as dopants to improve battery performance. The amount of carbon in the second particle PTC2 is typically lower than in the first particle PTC1 due to the difficulty in forming a smooth coating on single particles.

Referring again to FIG. 6, the positive electrode active material according to one or more embodiments will be described in more detail. The positive electrode active material according to one or more embodiments includes the first particle PTC1 and the second particle PTC2. In one or more embodiments, an amount by weight of the second particle may be greater than an amount by weight of the first particle. The mixing ratio of the first particle PTC1 and the second particle PTC2 in the positive electrode active material may be about 40:60 to about 10:90. In one or more embodiments, the mixing ratio may be about 40:60 to about 20:80, or about 40:60 to about 30:70. An amount of the second particle PTC2 may be greater than an amount of the first particle PTC1 in the positive electrode active material.

In one or more embodiments, the mixing ratio of the first particle PTC1 and the second particle PTC2 may be adjusted such that an amount of Mn with respect to metal elements other than lithium, in the positive electrode active material, becomes about 10 at% to about 30 at%. As used herein, "at%" may refer to atomic fraction of atomic percentage and indicates the percentage amount of specific element in a compound. For example, if (e.g., when) the first particle PTC1 contains $LiMn_{0.6}Fe_{0.4}PO_4$ and the second particle PTC2 contains $LiFePO_4$, the mixing ratio of the first particle PTC1 and the second particle PTC2 may be adjusted to about 30:70. At this time, the amount of Mn with respect to the metal elements other than lithium (here, Mn and Fe) in the mixture may be about 18 at%.

Because the first particle PTC1 contains Mn, the first particle PTC1, compared with the second particle PTC2, may improve an operating voltage of a rechargeable battery. By mixing the first particle PTC1 and the second particle PTC2 in an appropriate or suitable ratio to adjust the amount of Mn to about 10 at% to about 30 at%, the positive electrode active material according to the embodiments may have an improved operating voltage, compared with a comparable LFP (lithium iron phosphate) battery.

The compound represented by Formula 1 may have a lower pellet density than the compound represented by Formula 2. According to one or more embodiments of the present disclosure, because the first particle PTC1 is used as a secondary particle and is mixed with a second particle PTC2, the overall pellet density may be improved (e.g., may be increased).

In the positive electrode active material according to one or more embodiments of the present disclosure, the first particle PTC1 that is a secondary particle and the second particle PTC2 that is (e.g., in a form of) a single particle are mixed therein, thereby improving the pellet density and capacity. In one or more embodiments, the pellet density of the positive electrode active material, according to one or more embodiments of disclosure, may be about 2.0 g/cc to about 2.5 g/cc.

In the positive electrode active material according to one or more embodiments, the first particle PTC1 that is a secondary particle and the second particle PTC2 that is a single particle are mixed therein, thereby improving the low-temperature characteristics. In one or more embodiments, a capacity of the rechargeable lithium battery at about -20 °C compared with an initial discharge amount thereof at about 25 °C (capacity at about -20 °C/initial discharge amount at about 25 °C) may be about 40% or greater. For example, the capacity at about -20 °C, compared with the initial discharge amount at about 25 °C (capacity at about -20 °C /initial discharge amount at about 25 °C) of the rechargeable lithium battery, according to one or more embodiments of the present disclosure, may be about 40% to about 100%, about 40% to about 90%, or about 40% to about 70%. In one or more embodiments, the capacity at about -20 °C of the rechargeable lithium battery, according to one or more embodiments of disclosure, may be about 15% to about 70% higher than the capacity at about -20 °C of a rechargeable lithium battery having only the second particle PTC2.

In the positive electrode active material according to one or more embodiments of the present disclosure, the first particle PTC1 that is a secondary particle and the second particle PTC2 that is a single particle are mixed therein, thereby improving the average voltage and energy density. In one or more embodiments, the average voltage of the rechargeable lithium battery, according to one or more embodiments of disclosure, may be about 3.0 V to about 4.0 V. In one or more embodiments, because the average voltage is proportionate to the energy density, the increase in average voltage may also contribute to increase in energy density. The positive electrode active material according to one or more embodiments may have a bimodal form including a secondary particle (for example, the first particle PTC1) and a single particle (for example, the second particle PTC2) having different average particle diameters. Because the single particle can fill a void between the secondary particles, the integration density of the positive electrode active material layer AML1 may be improved. For example, the positive electrode active material layer AML1 according to one or more embodiments may have relatively high energy density per unit volume. In one or more embodiments, the energy density of the rechargeable lithium battery according to one or more embodiments of the present disclosure may be about 1000 Wh/L to about 1300 Wh/L.

Because the second particle PTC2, which may be a single particle, has an extremely small (e.g., nano-sized) average particle diameter, a large amount of the binder BND may be desired or required to bind the second particle PTC2 to the current collector COL1. However, because the positive electrode active material according to one or more embodiments further includes the first particle PTC1 having a relatively large average particle diameter, in addition to the second particle PTC2, the positive electrode active material layer AML1 may be easily or suitably bound to the current collector COL1. For example, due to the addition of the first particle PTC1, the amount of the binder BND in the positive electrode active material layer AML1 may be reduced.

**Preparation Method of Positive Electrode Active Material**

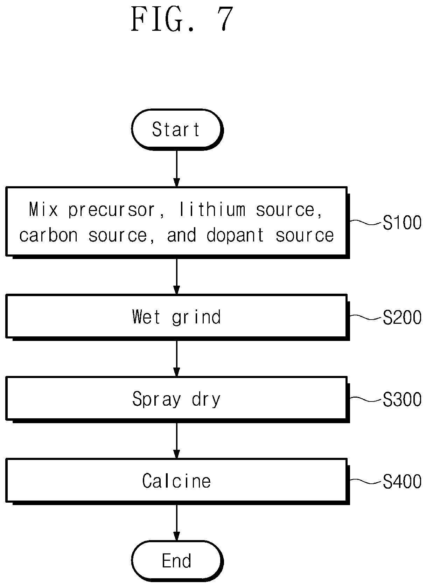

FIG. 7 is a flowchart showing a preparation method of a positive electrode active material according to one or more embodiments of the present disclosure. Referring to FIG. 7, preparation of a first particle PTC1 according to one or more embodiments of the present disclosure will be described in more detail.

A manganese iron phosphate precursor, a lithium source, a carbon source, and a dopant source may be added to a solvent and mixed (S100). For example, the solvent may be water, ethanol, and/or the like. The manganese iron phosphate precursor may be a compound containing all of manganese (Mn), iron (Fe), and phosphorus (P); a mixture of a manganese (Mn)-containing compound and an iron (Fe)- and phosphorus (P)-containing compound; and/or a (e.g., any suitable) mixture of a manganese (Mn)-containing compound, an iron (Fe)-containing compound, and a phosphorus (P)-containing compound. For example, the manganese iron phosphate precursor may include $Mn_xFe_{1-x}PO_4 \cdot H_2O$; a mixture of $MnCO_3$ and $FePO_4 \cdot H_2O$; and/or a (e.g., any suitable) mixture of $MnCO_3$, $FeSO_4$, and $H_3PO_4$. Here, x may be about 0.4 to about 0.9.

The lithium source may include at least one selected from the group consisting of lithium oxide, lithium hydroxide, lithium chloride, lithium nitrate, lithium nitrite, lithium formate, lithium acetate, lithium oxalate, lithium carbonate, lithium phosphate, lithium hydrogen phosphate, lithium dihydrogen phosphate, and lithium citrate.

The carbon source may include at least one selected from the group consisting of glucose, sucrose, fructose, cellulose, starch, citric acid, polyacrylic acid, polyethylene glycol, and dopamine.

The dopant source may include a dopant metal-containing oxide and/or a dopant metal-containing chloride. For example, the dopant source may include at least one selected from the group consisting of titanium oxide and magnesium oxide.

Wet grinding may be performed on the mixture (S200). For the wet grinding, a general wet mill capable of suitable temperature control may be used. In particular, at least one selected from among a beads mill, a ball mill, an attrition mill, an apex mill, a super mill, and a basket mill may be used for the wet grinding. Through the wet grinding process, particles in the mixture may be ground to a fine size.

According to one or more embodiments of the present disclosure, the wet grinding (S200) may also not be performed. For example, in order to maximize or increase the average particle diameter of the first particle PTC1 to be finally prepared, the wet grinding (S200) of precursor particles may not be performed.

The solvent may be removed from the mixture to form a dried mixture. According to one or more embodiments of disclosure, the forming of the dried mixture may include performing spray drying on the mixture (S300). Any suitable spray-drying device may be used for the spray drying. For example, the spray drying may be performed by using at least one selected from among an ultrasonic spray-drying device, an air nozzle spray-drying device, an ultrasonic nozzle spray-drying device, a filter expansion droplet-generating device, and an electrostatic spray-drying device.

The particles, finely reduced to a size of a first primary particle after the wet grinding process, may be aggregated (e.g., agglomerated) with each other through the spray drying process to thereby form a secondary particle. Therefore, by adjusting the flow rate and velocity of carrier gas, temperature, the residence time in a reactor, internal pressure, and/or the like during the spray drying process, the first particle PTC1 may be formed into the secondary particle of a desired or suitable size.

In one or more embodiments, the mixture to be spray-dried may have a total solid content (TSC) of about 20 wt% to about 40 wt%. The total solid content may refer to a value converted to percentage of the weight of a solid material remaining after solvent evaporation (that is, dried mixture) with respect to the total weight 100 wt% of the mixture (that is, spray liquid). For example, the spray liquid (e.g., the mixture to be spray-dried) may have a total solid content of about 30 wt%.

When the total solid content of the spray liquid (e.g., the mixture to be spray-dried) is less than about 20 wt%, certain disadvantages may occur, for example, an average particle diameter of the first particle PTC1 may decrease and productivity may be reduced. When the total solid content is greater than about 40 wt%, adjusting the average particle diameter of the first particle PTC1 may become difficult, and size difference between the first particles PTC1 may increase.

The spray liquid according to one or more embodiments may have a viscosity of about 1500 mPa·s to about 2500 mPa·s with the above-mentioned total solid content. For example, the spray liquid may have a viscosity of about 2000 mPa·s. The viscosity can be measured at 25 °C using, for example, a Brookfield DV2T Viscometer (AMETEK Brookfield), Brookfield DVNext Rheometer (AMETEK Brookfield), Anton Paar MCR Series Rheometers (e.g., MCR 102, MCR 302), TA Instruments Discovery HR Series Rheometers (e.g., HR-10, HR-20), or Malvern Kinexus Rheometer (e.g., Kinexus Ultra+, Kinexus Pro+).

In one or more embodiments, the spray drying may be performed at a temperature of about 100 °C to about 300 °C. Spray gas (for example, air), used for the spray drying, may be injected at a first temperature, and discharged at a second temperature. For example, the first temperature may be about 200 °C to about 250 °C. The second temperature may be about 80 °C to about 150 °C.

The spray liquid for the spray drying may have a flow rate of about 30 mL/min to about 80 mL/min. If the flow rate is less than about 30 mL/min, disadvantages such as nozzle clogging, reduced productivity, and/or the like may occur. If the flow rate is greater than about 80 mL/min, due to moisture condensation in the spray-drying device, the mixture may not be dried completely.

The spray liquid may have an input pressure of about 0.3 MPa to about 0.7 Mpa. For example, the input pressure of the spray liquid may be about 0.5 MPa.

The dried mixture may be calcined in an inert atmosphere (S400). The inert atmosphere may be a nitrogen atmosphere and/or an argon atmosphere. The temperature at which the calcination process is performed may be about 500 °C to about 1000 °C, or about 600 °C to about 800 °C. The execution time of the calcination process may be about 4 hours to about 20 hours, or about 6 hours to about 12 hours. As the dried mixture is calcined, the first particle PTC1 containing the compound represented by Formula 1 may be formed.

In the preparation of the first particle PTC1, according to one or more embodiments, the carbon source may be introduced to the manganese iron phosphate precursor to form a carbon coating layer uniformly (e.g., substantially uniformly) on surfaces of first primary particles. Thereafter, the first primary particles may be closely aggregated (e.g., agglomerated) through the spray drying to form a dense sphere-shaped secondary particle. As a result, the first particle PTC1 may include the suitably stable carbon coating layer on the outside and inside of the first particle PTC1, and may thus have a relatively high carbon content (e.g., amount). Due to the high carbon content (e.g., amount) of the first particle PTC1, a positive electrode active material layer AML1 may have improved conductivity.

Preparation of a second particle PTC2 according to one or more embodiments of the present disclosure will be described in more detail.

An iron phosphate precursor, a lithium source, a carbon source, and a dopant source may be added to a solvent and mixed. For example, the solvent may be water, ethanol, and/or the like. The iron phosphate precursor may be a compound containing both (e.g., simultaneously) iron (Fe) and phosphorus (P), and/or a (e.g., any suitable) mixture of an iron (Fe)-containing compound and a phosphorus (P)-containing compound. For example, the iron phosphate precursor may include $FePO_4 \cdot H_2O$, and/or a (e.g., any suitable) mixture of $FeSO_4$ and $H_3PO_4$.

The lithium source, the carbon source, and the dopant source may be the same or similar as/to those described in connection with the preparation of the first particle PTC1.

Wet grinding may be performed on the mixture. The wet grinding process may be the same or similar as/to the one described in connection with the preparation of the first particle PTC1.

The solvent may be removed from the mixture to form a dried mixture. The forming of the dried mixture may include performing direct evaporation on (e.g. of) the mixture. For example, the direct evaporation may include static drying and/or spray drying. To form the second particle PTC2 into a single particle, it may be preferable to use the static drying.

The dried mixture may be calcined in an inert atmosphere. The conditions of the calcination process may be the same or similar as/to those described in connection with the preparation of the first particle PTC1. As the dried mixture is calcined, the second particle PTC2 containing the compound represented by Formula 2 may be formed.

Dry grinding may be further performed on the calcined second particle PTC2. Accordingly, the second particle PTC2 may have a single particle form. In contrast, for the first particle PTC1 according to the present embodiments, the dry grinding may not be performed.

By mixing the prepared first particle PTC1 and second particle PTC2 in an appropriate or suitable ratio, the positive electrode active material according to one or more embodiments of the present disclosure may be formed.

Analysis of a carbon element according to one or more embodiments may be performed using an Elementar MICRO Cube elemental analyzer. The specific operation method and conditions may be as follows. A sample of 1 to 2 mg is weighed in a tin cup, placed in an automatic sampling tray and introduced into a combustion tube through a ball valve, and the combustion is carried out at a combustion temperature of about 1000 °C. Subsequently, reduction of the combustion gas using reduced copper is carried out to form carbon dioxide. Carbon dioxide was detected using a thermal conductivity detector (TCD).

Scanning electron microscope-energy dispersive X-ray spectroscopy (SEM-EDS) and quantitative analyses on a particle surface may be conducted to measure the carbon content (e.g., amount) according to one or more embodiments. In addition to SEM-EDS, inductively coupled plasma-mass spectrometry (ICP-MS), inductively coupled plasma optical emission spectroscopy (ICP-OES), and/or the like may be used to measure the carbon content (e.g., amount).

Hereinafter, examples and comparative examples of the present disclosure are described. However, the following examples are provided for illustrative purpose only and are not to be construed to limit the scope of the present disclosure.

**Example 1: Preparation of First Particle in Form of Secondary Particle**

A manganese iron phosphate precursor ($Mn_{0.6}Fe_{0.4}PO_4$), lithium carbonate, magnesium oxide, and titanium dioxide were mixed in a molar ratio of (Mn+Fe):Li:Mg:Ti=about 1:1.03:0.0025:0.004. 12 wt% of glucose was added to the mixture. The slurry mixture was dried over evaporation, through spray drying, under conditions of a spray pressure of about 0.5 MPa and a temperature of about 230 °C. The dried mixture was calcined in a nitrogen atmosphere at about 750 °C and for about 10 hours to obtain a first particle in the form of a secondary particle. The average particle diameter of the first particle was about 3 $\mu$m to about 7 $\mu$m. The size of a first primary particle of the first particle was about 50 nm to about 150 nm.

**Example 2: Preparation of Second Particle in Form of Single Particle**

An iron phosphate precursor ($FePO_4$), lithium carbonate, and titanium dioxide were mixed in a molar ratio of Fe:Li:Ti=about 1:1.03:0.004. 10 wt% of glucose was added to the mixture. Wet grinding was performed on the mixture by ball milling. The mixture was dried over evaporation on a tray by heating, and then dried in a vacuum oven at about 120 °C for about 4 hours. The dried mixture was calcined in a nitrogen atmosphere at about 750 °C for about 10 hours. The calcined product was ground to obtain a second particle in the form of a single particle. The average particle diameter of the second particle was about 0.5 $\mu$m to about 2.5 $\mu$m. The size of a second primary particle of the second particle was about 200 nm to about 300 nm.

In other words, in Example 1, a manganese iron phosphate precursor ($Mn_{0.6}Fe_{0.4}PO_4$), lithium carbonate, magnesium oxide, and titanium dioxide were mixed with 12 wt% glucose and processed through spray drying and calcination to form the first particle in a secondary particle form, with an average diameter of 3 $\mu$m to 7 $\mu$m and primary

particle sizes of 50 nm to 150 nm. In Example 2, an iron phosphate precursor ($FePO_4$), lithium carbonate, magnesium oxide, and titanium dioxide were mixed with 10 wt% glucose, wet ground, dried, and calcined to produce the second particle in a single particle form, with an average diameter of 0.5 $\mu$m to 2.5 $\mu$m and primary particle sizes of 200 nm to 300 nm.

### Example 3-1: Mixture Preparation of First Particle and Second Particle

The first particle according to Example 1 and the second particle according to Example 2 were mixed in a mass ratio of about 10:90 to prepare a positive electrode active material.

### Example 3-2: Mixture Preparation of First Particle and Second Particle

The first particle according to Example 1 and the second particle according to Example 2 were mixed in a mass ratio of about 20:80 to prepare a positive electrode active material.

### Example 3-3: Mixture Preparation of First Particle and Second Particle

The first particle according to Example 1 and the second particle according to Example 2 were mixed in a mass ratio of about 30:70 to prepare a positive electrode active material.

### Example 3-4: Mixture Preparation of First Particle and Second Particle

The first particle according to Example 1 and the second particle according to Example 2 were mixed in a mass ratio of about 40:60 to prepare a positive electrode active material.

### Comparative Example 1: Mixture Preparation of First Particle and Second Particle

The first particle according to Example 1 and the second particle according to Example 2 were mixed in a mass ratio of about 50:50 to prepare a positive electrode active material.

### Preparation of Positive Electrode

95 wt% of a final positive electrode active material, 3 wt% of a polyvinylidene fluoride binder, and 2 wt% of a carbon black conductive material were mixed in an N-methylpyrrolidone solvent to prepare a positive electrode active material slurry. The positive electrode active material slurry was applied to an aluminium current collector and dried, and then rolling was performed to prepare a positive electrode.

### Manufacture of Rechargeable Lithium Battery

The prepared positive electrode and a lithium metal counter electrode, as a counter electrode, were used to prepare a 2032-type (kind) coin half-cell. A separator (thickness: about 16 $\mu$m) formed of a porous polyethylene (PE) film was interposed between the positive electrode and the lithium metal counter electrode, and an electrolyte solution was introduced to manufacture a rechargeable lithium battery. The electrolyte solution obtained by mixing $LiPF_6$ of 1.3 M in a mixed solvent containing ethylene carbonate (EC), ethylmethyl carbonate (EMC), and dimethyl carbonate (DMC) in a volume ratio of about 3:4:3 was used as an electrolyte.

### Evaluation Example 1: Surface Analysis of Positive Electrode Active Material

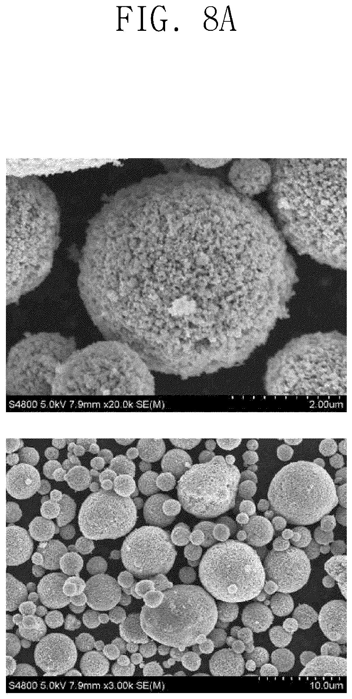

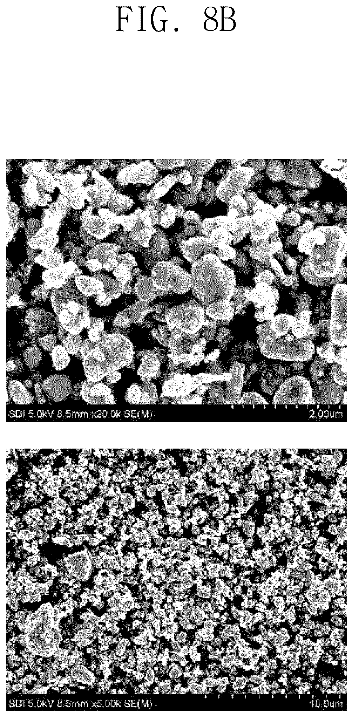

FIG. 8A shows a scanning electron microscope (SEM) image of the positive electrode active material prepared according to Example 1. FIG. 8B shows a SEM image of the positive electrode active material prepared according to Example 2. Referring to FIG 8A, it can be seen that the first particle according to one or more embodiments of the present disclosure has the form of a sphere-shaped secondary particle in which a plurality of first primary particles are aggregated (e.g., agglomerated). Referring to FIG. 8B, it can be seen that the second particle according to one or more embodiments of the present disclosure has the form of a single particle.

### Evaluation Example 2: Evaluation on Active Material

The pellet densities (PD) and carbon contents of the positive electrode active materials according to Examples 1, 2, and 3-1 to 3-4, and Comparative Example 1 and the amounts of Mn with respect to metal elements other than lithium in the positive electrode active materials, according to Examples 1, 2, and 3-1 to 3-4, and Comparative Example 1 were measured, and the results are listed in Table 1. The pellet density was measured by putting 3 grams of a positive electrode active material in a pellet mold and applying a force of about 4.0 US tons for about 30 seconds.

Table 1

| Classificatio n | Mixing ratio | | Powder | | |
|---|---|---|---|---|---|
| | Single particle (second particle PTC2) | Secondar y particle (first particle PTC1) | PD (g/cc) | Amount of C (wt%) | Amount of Mn (at%) |
| Example 1 | 0% | 100% | 2.35 | 2.20 | 60 |
| Example 2 | 100% | 0% | 2.41 | 1.52 | 0 |
| Example 3-1 | 90% | 10% | 2.40 | 1.59 | 6 |
| Example 3-2 | 80% | 20% | 2.40 | 1.66 | 12 |
| Example 3-3 | 70% | 30% | 2.39 | 1.75 | 18 |
| Example 3-4 | 60% | 40% | 2.39 | 1.82 | 24 |
| Comparativ e Example 1 | 50% | 50% | 2.38 | 1.87 | 30 |

Referring to Table 1, it can be seen that the positive electrode active materials according to Examples 3-1 to 3-4 have higher pellet densities than the positive electrode active material according to Example 1. Without being bound by any particular theory, it is believed that by mixing the first particle PTC1 and the second particle PTC2, the pellet density of the positive electrode active material was improved, compared with the low pellet density of the positive electrode active material including only the first particle PTC1. In addition, it can be seen that the positive electrode active materials according to Examples 3-1 to 3-4 have higher carbon contents than the positive electrode active material according to Example 2.

**Evaluation Example 3: Evaluation on Battery Characteristics**

Characteristics of rechargeable lithium batteries prepared using the positive electrode active materials according to Examples 1, 2, and 3-1 to 3-4, and Comparative Example 1 were evaluated.

For initial charging and discharging, the rechargeable lithium battery was initially charged under conditions of a constant current (0.2 C) and a constant voltage (4.25 V), was rested for about 10 minutes and then discharged with a constant current (0.2 C) until a voltage reached 2.5 V. Thereafter, the charging and discharging cycles were repeated 50 times at about 25 °C under about 1.0 C/1.0 C conditions. In addition, a coin cell was additionally manufactured to measure the capacity with about 0.2 C at about -20 °C.

The results of evaluating the battery characteristics are listed in Table 2.

Table 2

| Classificat ion | Mixing ratio | | Coin cell | | | | | |
|---|---|---|---|---|---|---|---|---|
| | Single particle (secon d particle PTC2) | Secon dary particl e (first particl e PTC1) | Charge amount (mAh/g) at 4.25 V | Dischar ge amount (mAh/g) at 4.25V | Efficie ncy (%) at 4.25V | Avera ge voltag e (V) | Capacit y (mAh/g ) at - 20 °C | Lifespan (%) at 4.25V/50 cycles |
| Example 1 | 0% | 100% | 149.2 | 139.4 | 93.4 | 3.60 | 125 | 99.1 |
| Example 2 | 100% | 0% | 166.8 | 156.1 | 93.6 | 3.20 | 55 | 98.1 |
| Example 3-1 | 90% | 10% | 165.0 | 154.4 | 93.6 | 3.23 | 65 | 99.2 |
| Example 3-2 | 80% | 20% | 163.5 | 152.9 | 93.5 | 3.27 | 78 | 99.3 |

(continued)

| Classification | Mixing ratio | | Coin cell | | | | | |
|---|---|---|---|---|---|---|---|---|
| | Single particle (second particle PTC2) | Secondary particl e (first particl e PTC1) | Charge amount (mAh/g) at 4.25 V | Discharge amount (mAh/g) at 4.25V | Efficiency (%) at 4.25V | Average voltage (V) | Capacity (mAh/g ) at - 20 °C | Lifespan (%) at 4.25V/50 cycles |
| Example 3-3 | 70% | 30% | 161.8 | 151.5 | 93.6 | 3.33 | 85 | 99.3 |
| Example 3-4 | 60% | 40% | 160.2 | 149.8 | 93.5 | 3.35 | 90 | 99.2 |
| Comparative Example 1 | 50% | 50% | 158.0 | 147.8 | 93.5 | 3.39 | 91 | 99.1 |

Referring to Table 2, it can be seen that the rechargeable batteries according to Examples 3-1 to 3-4 have higher capacities at about -20 °C than the rechargeable battery according to Example 2. It can be seen that the rechargeable batteries according to Examples 3-1 to 3-4 of the present disclosure have higher average voltages and lifespans than the rechargeable battery according to Example 2. Further, it can be seen that the rechargeable batteries according to Examples 3-3 and 3-4 have excellent or suitable efficiency and lifespan characteristics while having a high average voltage.

A positive electrode active material according to one or more embodiments of the present disclosure may include a first particle which is a secondary particle, and a second particle which is a single particle. Accordingly, a positive electrode active material layer may have improved electrical conductivity and pellet density, and an amount of a binder in the positive electrode active material layer may be reduced. A rechargeable lithium battery according to one or more embodiments of the present disclosure may have a relatively high operating voltage and improved low-temperature characteristics.

A battery manufacturing device, a battery management system (BMS) device, and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

Although one or more embodiments of the present disclosure have been described with reference to the accompanying drawings, it is understood that the present disclosure should not be limited to these embodiments but one or more suitable changes and modifications can be made within the scope of the following claims and their equivalents, and that the detailed description of the present disclosure, and the accompanying drawings, also fall within the scope of the present disclosure.

Embodiments are set out in the following clauses:

Clause 1. A preparation method comprising:

preparing a first particle having a first average particle diameter;
preparing a second particle having a second average particle diameter smaller than the first average particle diameter; and
mixing the first particle and the second particle,

wherein the preparing of the first particle comprises:

mixing a manganese iron phosphate precursor, a first lithium source, a first carbon source, and a first dopant source to form a first mixture,
drying the first mixture through spray drying, and
calcining the dried first mixture,

the preparing of the second particle comprises:

mixing an iron phosphate precursor, a second lithium source, a second carbon source, and a second dopant source to form a second mixture,
performing wet grinding on the second mixture,
drying the second mixture, and
calcining the dried second mixture, and

the first particle and the second particle are mixed such that an amount by weight of the second particle is greater than an amount by weight of the first particle,
wherein the preparation method is a preparation method of a positive electrode active material.

Clause 2. The preparation method of clause 1, wherein a mixing mass ratio of the first particle and the second particle is determined to provide an amount of Mn constituting about 10 at% to about 30 at% with respect to 100 at% metal elements other than lithium in the positive electrode active material.
Clause 3. The preparation method of clause 1 or clause 2, wherein the first mixture is utilized as a spray liquid of the spray drying and has a total solid content of about 20% to about 40%, and a viscosity of about 1500 mPa·s to about 2500 mPa·s.
Clause 4. The preparation method of any one of clauses 1 to 3, wherein the spray drying comprises forming a secondary particle by aggregation of particles in the first mixture.
Clause 5. The preparation method of any one of clauses 1 to 4,

wherein the spray drying is performed at a temperature of about 100 °C to about 300 °C, and
a spray liquid for the spray drying has an input pressure of about 0.3 MPa to about 0.7 MPa, and a flow rate of about 30 ml/min to about 80 ml/min.

**Claims**

1. A positive electrode active material comprising:

a first particle comprising a compound represented by Formula 1, and having a first average particle diameter; and
a second particle comprising a compound represented by Formula 2, and having a second average particle diameter smaller than the first average particle diameter,
wherein in the positive electrode active material, an amount by weight of the second particle is greater than an amount by weight of the first particle:

Formula 1 $\quad Li_{a1}Mn_{z1}Fe_{x1}B1_{y1}PO_{4-b1}$,

in Formula 1, $0.8 \leq a1 \leq 1.2$, $0.4 \leq z1 \leq 0.9$, $0.1 \leq x1 \leq 0.6$, $0 \leq y1 \leq 0.05$, $0 \leq b1 \leq 0.05$, and $x1 + y1 + z1 = 1$,

Formula 2 $\quad Li_{a2}Fe_{x2}B2_{y2}PO_{4-b2}$,

in Formula 2, $0.8 \leq a2 \leq 1.2$, $0.950 \leq x2 \leq 0.999$, $0.001 \leq y2 \leq 0.05$, $0 \leq b2 \leq 0.05$, and $x2 + y2 = 1$, and
each of B1 in Formula 1 and B2 in Formula 2 is at least one element selected from the group consisting of Ti and Mg.

2. The positive electrode active material as claimed in claim 1,

wherein the first particle comprises a plurality of first primary particles aggregated with each other,
the second particle comprises at least one second primary particle, and

each first primary particle of the plurality of first primary particles has a size smaller than a size of the second primary particle.

3. The positive electrode active material as claimed in claim 2, wherein the size of the first primary particle is about 50 nm to about 150 nm.

4. The positive electrode active material as claimed in any one of claims 1 to 3, wherein a mixing mass ratio of the first particle and the second particle is about 40:60 to about 10:90.

5. The positive electrode active material as claimed in any one of claims 1 to 4, wherein an amount of Mn with respect to 100 at% metal elements other than lithium in the positive electrode active material is about 10 at% to about 30 at%.

6. The positive electrode active material as claimed in any one of claims 1 to 5, wherein a pellet density of the positive electrode active material is about 2.0 g/cc to about 2.5 g/cc.

7. The positive electrode active material as claimed in any one of claims 1 to 6,

   wherein the first particle comprises a first coating layer comprising carbon, and
   an amount of carbon is about 1.5 wt% to about 2.5 wt% with respect to 100 wt% of the first particle.

8. The positive electrode active material as claimed in claim 7,

   wherein the second particle comprises a second coating layer comprising carbon, and
   the amount (wt%) of carbon in the first particle is greater than an amount (wt%) of carbon in the second particle.

9. The positive electrode active material as claimed in any one of claims 1 to 8, wherein the first particle has a porosity of about 30% to about 50%.

10. The positive electrode active material as claimed in any one of claims 1 to 9, wherein a span value, obtained by analysis on the first particle utilizing a particle size analyzer, is about 0.3 to about 0.75.

11. The positive electrode active material as claimed in any one of claims 1 to 10,

    wherein B1 in the first particle is Ti and Mg,
    in the first particle, an atomic fraction of Ti is greater than an atomic fraction of Mg, and
    the first particle satisfies Expression 1 :

Expression 1

$$3.0 < \frac{2 \times (\text{oxidation number of Mg}) + 4 \times (\text{oxidation number of Ti})}{(\text{oxidation number of Mg}) + (\text{oxidation number of Ti})} < 3.5.$$

12. The positive electrode active material as claimed in any one of claims 1 to 11,

    wherein the second particle comprises a second coating layer comprising carbon, and
    an amount of carbon in the second particle is about 1.5 wt% to about 2.0 wt% with respect to 100 wt% of the second particle.

13. The positive electrode active material as claimed in any one of claims 1 to 12, wherein the first average particle diameter is about 3 $\mu$m to about 7 $\mu$m.

14. The positive electrode active material as claimed in any one of claims 1 to 13,

    wherein the first particle is a spherically-shaped secondary particle, and
    the second particle is a single particle.

15. A rechargeable lithium battery comprising the positive electrode active material as claimed in any one of claims 1 to 14.

# FIG. 1

# FIG. 2

# FIG. 3

# FIG. 4

# FIG. 5

# FIG. 6

AML1

PTC1

NNP  NNP

PTC2

CDM

BND

# FIG. 7

```
                    ┌─────────┐
                    │  Start  │
                    └─────────┘
                         │
                         ▼
    ┌──────────────────────────────────────┐
    │  Mix precursor, lithium source,      │────S100
    │  carbon source, and dopant source    │
    └──────────────────────────────────────┘
                         │
                         ▼
    ┌──────────────────────────────────────┐
    │              Wet grind               │────S200
    └──────────────────────────────────────┘
                         │
                         ▼
    ┌──────────────────────────────────────┐
    │              Spray dry               │────S300
    └──────────────────────────────────────┘
                         │
                         ▼
    ┌──────────────────────────────────────┐
    │              Calcine                 │────S400
    └──────────────────────────────────────┘
                         │
                         ▼
                    ┌─────────┐
                    │   End   │
                    └─────────┘
```

# FIG. 8A

# FIG. 8B

Europäisches
Patentamt

European
Patent Office

Office européen
des brevets

# EUROPEAN SEARCH REPORT

**Application Number**

EP 25 16 8643

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/016240 A1 (LIU QIAN [CN] ET AL) 19 January 2023 (2023-01-19) | 1-15 | INV. H01M4/131 |
| Y | * paragraph [0056]; example 25; table 1 * ----- | 1,4 | H01M4/133 H01M4/36 |
| X | CN 116 936 797 A (TIANNENG BATTERY GROUP CO LTD) 24 October 2023 (2023-10-24) * paragraph [0055] - paragraph [0058]; example 1 * ----- | 1-15 | H01M4/58 H01M4/587 H01M10/0525 |
| Y | AU 2022 350 974 A1 (BYD CO LTD [CN]) 25 January 2024 (2024-01-25) * paragraphs [0064], [0103]; example 5 * ----- | 1,4 | |
| A | US 10 411 250 B2 (TOSHIBA KK [JP]) 10 September 2019 (2019-09-10) * example 6; table 1 * ----- | 1-15 | |

**TECHNICAL FIELDS SEARCHED (IPC)**

H01M

The present search report has been drawn up for all claims

| Place of search | Date of completion of the search | Examiner |
|---|---|---|
| The Hague | 23 December 2025 | Agra-Gutierrez, C |

EPO FORM 1503 03.82 (P04C01)

## ANNEX TO THE EUROPEAN SEARCH REPORT
## ON EUROPEAN PATENT APPLICATION NO.

EP 25 16 8643

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2025

| Patent document cited in search report | Publication date | Patent family member(s) | Publication date |
|---|---|---|---|
| US 2023016240 A1 | 19-01-2023 | CN 114982002 A | 30-08-2022 |
| | | EP 4075538 A1 | 19-10-2022 |
| | | EP 4407714 A2 | 31-07-2024 |
| | | HU E068287 T2 | 28-12-2024 |
| | | US 2023016240 A1 | 19-01-2023 |
| | | WO 2022041259 A1 | 03-03-2022 |
| CN 116936797 A | 24-10-2023 | NONE | |
| AU 2022350974 A1 | 25-01-2024 | AU 2022350974 A1 | 25-01-2024 |
| | | CA 3224474 A1 | 30-03-2023 |
| | | CN 115863620 A | 28-03-2023 |
| | | EP 4345950 A1 | 03-04-2024 |
| | | JP 7775344 B2 | 25-11-2025 |
| | | JP 2024531047 A | 29-08-2024 |
| | | KR 20240017066 A | 06-02-2024 |
| | | US 2024145715 A1 | 02-05-2024 |
| | | WO 2023046066 A1 | 30-03-2023 |
| US 10411250 B2 | 10-09-2019 | CN 107210438 A | 26-09-2017 |
| | | EP 3352261 A1 | 25-07-2018 |
| | | JP 6096985 B1 | 15-03-2017 |
| | | JP WO2017046858 A1 | 14-09-2017 |
| | | US 2018026260 A1 | 25-01-2018 |
| | | WO 2017046858 A1 | 23-03-2017 |

EPO FORM P0459

For more details about this annex : see Official Journal of the European Patent Office, No. 12/82